# EUROPEAN PATENT SPECIFICATION

(11) **EP 4 354 297 B1**
(45) Date of publication and mention of the grant of the patent: **19.11.2025**
(21) Application number: 22824093.3
(22) Date of filing: 07.06.2022
(51) Int. Cl.: G06F 11/07, G06F 16/215, H04L 65/40

(54) **DATA INTEGRITY PROCESSING METHOD AND APPARATUS, AND ELECTRONIC DEVICE**
VERFAHREN UND VORRICHTUNG ZUR DATENINTEGRITÄTSVERARBEITUNG SOWIE ELEKTRONISCHE VORRICHTUNG
PROCÉDÉ ET APPAREIL DE TRAITEMENT D'INTÉGRITÉ DE DONNÉES, ET DISPOSITIF ÉLECTRONIQUE

(30) Priority: 18.06.2021 CN 202110678967
(43) Date of publication of application: 17.04.2024
(73) Proprietor: Hangzhou Hikvision Digital Technology Co., Ltd., Hangzhou, Zhejiang 310051 (CN)
(72) Inventor: TAO, Duolei, Hangzhou, Zhejiang 310051 (CN); SHEN, Zhiming, Hangzhou, Zhejiang 310051 (CN)
(74) Representative: Goddar, Heinz J.
(86) International application number: PCT/CN2022/097278
(87) International publication number: WO 2022/262613

(56) References cited:
- CN-A- 1 503 535
- CN-A- 1 503 535
- CN-A- 105 407 135
- CN-A- 110 969 723
- CN-A- 110 969 723
- CN-A- 112 669 858
- CN-A- 113 419 885
- JP-A- H10 145 459
- US-B1- 6 836 862

## Description

### TECHNICAL FIELD

The present invention relates to the field of computer communication and in particular to a data integrity processing method and apparatus, and an electronic device.

### BACKGROUND

A management network includes a management platform and at least one device. The device reports collected data to the management platform, and the management platform performs service processing by using the data reported by the device.

In a related reporting mechanism, the device may re-report data after finding it fails to actively report the data. The management platform may perform service processing by directly using the data re-reported by the device. However, in practical applications, due to some reasons such as anomalies (e.g., link anomaly, or management platform anomaly or the like), the device may consider it has actively and normally reported data but the management platform does not receive the data reported by the device. At this time, the data received by the management platform from the device is incomplete, and thus the service processing effect of the management platform is poor.
US6836862B1 discloses a method and system thereof for monitoring the data transfer integrity of a wireless connection between two devices, in particular two Bluetooth-enabled transceivers. CN1503535A discloses a guaranteeing method for the reliability of TRAP data packet transfer in a simple network management protocol (SNMP).
CN110969723A discloses a data management method, detection equipment, a server and a computer readable storage medium.

### SUMMARY

In view of the above, the present invention provides a data integrity processing method and apparatus, and an electronic device, so as to enable a management platform to automatically perform data integrity check.

The invention is set out in the appended set of claims. Specifically, the present invention is implemented by using the following technical solution.

According to a first aspect of embodiments of the present invention, there is provided a data integrity processing method, which is applied to a management platform. The method includes:
receiving data reported by at least one device managed by the management platform;
in response to determining to perform data integrity processing, determining data reported by a target device within a specified time period from the received data, and based on data identifiers of the data reported by the target device within the specified time period, determining target data that the management platform should have received but have not received from the target device; where the target device is a device in the at least one device; and
obtaining the target data from the target device.

In some embodiments, each of the data identifiers includes a data number;
based on the data identifiers of the data reported by the target device within the specified time period, determining the target data that the management platform should have received but have not received from the target device includes:
based on discontinuity of the data numbers of the data reported by the target device within the specified time period, determining the target data that the management platform should have received but have not received from the target device.

In some embodiments, data numbers of different data are different.

In some embodiments, in a case that the data numbers of partial data are same, each of the data identifiers further includes a timestamp indicating a data generation time;
based on the discontinuity of the data numbers of the data reported by the target device within the specified time period, determining the target data that the management platform should have received but have not received from the target device includes:
based on the timestamps of the received data, determining a data generation sequence of the received data; and
based on the data generation sequence of the received data and the discontinuity of the data numbers of the data reported by the target device within the specified time period, determining the target data that the management platform should have received but have not received from the target device.

In some embodiments, based on the discontinuity of the data numbers of the data reported by the target device within the specified time period, determining the target data that the management platform should have received but have not received from the target device includes:
for any two pieces of data with adjacent data numbers, if an absolute value of a difference of the data numbers of the two pieces of data is within a preset threshold range, determining data with data number between the data numbers of the two pieces of data as the target data; and
obtaining the target data from the target device includes:
sending the data number of the target data to the target device; and
receiving the target data indicated by the data number from the target device.

In some embodiments, when the data numbers are numbered in a cyclic numbering manner, the preset threshold range is greater than an absolute value of a difference of the data numbers of two pieces of data sequentially collected by the target device and less than an absolute value of a difference of an end value and an initial value of the cyclic numbers.

In some embodiments, determining the data reported by the target device within the specified time period from the received data includes:
when different devices have different data numbering manners, selecting, from the received data, the data that is within the specified time period and corresponds in data numbering manner to the target device as the data reported by the target device within the specified time period; or,
when different devices have a same data numbering manner and each of the data identifiers further comprises a device identifier, selecting, from the received data, the data that is within the specified time period and each has a data identifier containing the device identifier of the target device as the data reported by the target device within the specified time period.

In some embodiments, obtaining the target data from the target device includes:
if a connection between the management platform and the target device is normal, receiving the target data from the target device via the connection; and
if the connection between the management platform and the target device is abnormal, repairing the connection and after the repair is successful, receiving the target data from the target device via the connection.

In some embodiments, if the connection between the management platform and the target device is abnormal, repairing the connection includes: based on a connection parameter of the connection, repairing the connection; and if it is detected that the connection is still abnormal after elapse of a preset time length starting from repairing the connection, giving alarm information; where the alarm information includes the connection parameter of the connection for triggering external to repair the connection.

In some embodiments, after obtaining the target data from the target device, the method further includes:
performing, based on the received data, de-duplication processing on the target data obtained from the target device.

In some embodiments, after receiving the data reported by one or more of the at least one device managed by the management platform, the method further includes:
performing, based on the received data, de-duplication processing on the data obtained from the one or more of the at least one device.

In some embodiments, determining to perform data integrity processing includes:
when an integrity check period expires, determining to perform data integrity processing;
   or,
when an integrity check instruction is received, determining to perform data integrity processing;
   or,
when a preset integrity check time point is reached, determining to perform data integrity processing.

According to a second aspect of embodiments of the present invention, there is provided a data integrity processing apparatus, which is applied to a management platform. The apparatus includes:
a receiving unit, configured to receive data reported by at least one device managed by the management platform;
a determining unit, configured to, when determining to perform data integrity processing, determine data reported by a target device within a specified time period from received data, and based on data identifiers of the data reported by the target device within the specified time period, determine target data that the management platform should have received but have not received from the target device; where the target device is a device in the at least one device;
an obtaining unit, configured to obtain the target data from the target device.

In some embodiments, each of the data identifiers includes a data number;
when, based on the data identifiers of the data reported by the target device within the specified time period, determining the target data that the management platform should have received but have not received from the target device, the determining unit is configured to: based on discontinuity of the data numbers of the data reported by the target device within the specified time period, determine the target data that the management platform should have received but have not received from the target device.

In some embodiments, in a case that the data numbers of partial data are same, each of the data identifiers further includes a timestamp indicating a data generation time; when, based on the discontinuity of the data numbers of the data reported by the target device within the specified time period, determining the target data that the management platform should have received but have not received from the target device, the determining unit is configured to, based on the timestamps of the received data, determine a data generation sequence of the received data; based on the data generation sequence of the received data and the discontinuity of the data numbers of the data reported by the target device within the specified time period, determine the target data that the management platform should have received but have not received from the target device.

In some embodiments, when based on the discontinuity of the data numbers of the data reported by the target device within the specified time period, determining the target data that the management platform should have received but have not received from the target device, the determining unit is configured to, for any two pieces of data with adjacent data numbers, if an absolute value of a difference of the data numbers of the two pieces of data is within a preset threshold range, determine data with data number between the data numbers of the two pieces of data as the target data;
when obtaining the target data from the target device, the obtaining unit is configured to send the data number of the target data to the target device, and receive the target data indicated by the data number from the target device.

In some embodiments, when the data numbers are numbered in a cyclic numbering manner, the preset threshold range is greater than an absolute value of a difference of the data numbers of two pieces of data sequentially collected by the target device and less than an absolute value of a difference of an end value and an initial value of the cyclic numbers.

In some embodiments, when determining the data reported by the target device within the specified time period from the received data, the determining unit is configured to, in a case that different devices have different data numbering manners, select, from the received data, the data which is within the specified time period and corresponds in data numbering manner to the target device as the data reported by the target device within the specified time period; or, in a case that different devices have a same data numbering manner and each of the data identifiers further includes a device identifier, select, from the received data, the data which is within the specified time period and each has a data identifier containing the device identifier of the target device as the data reported by the target device within the specified time period.

In some embodiments, when obtaining the target data from the target device, the obtaining unit is configured to, if a connection between the management platform and the target device is normal, receive the target data from the target device via the connection; if the connection between the management platform and the target device is abnormal, repair the connection and after the repair is successful, receive the target data from the target device via the connection.

In some embodiments, if the connection between the management platform and the target device is abnormal, when repairing the connection, the obtaining unit is configured to, based on a connection parameter of the connection, repair the connection; if it is detected that the connection is still abnormal after elapse of a preset time length starting from repairing the connection, give alarm information; where the alarm information includes the connection parameter of the connection for triggering external to repair the connection.

In some embodiments, after obtaining the target data from the target device, the obtaining unit is configured to, based on the received data, perform de-duplication processing on the target data obtained from the target device;
after receiving the data reported by one or more of the at least one device managed by the management platform, the receiving unit is configured to, based on the received data, perform de-duplication processing on the data obtained from the one or more of the at least one device.

In some embodiments, when determining to perform data integrity processing, the determining unit is configured to, when an integrity check period expires, determine to perform data integrity processing; or, when an integrity check instruction is received, determine to perform data integrity processing; or, when a preset integrity check time point is reached, determine to perform data integrity processing.

According to a third aspect of embodiments of the present invention, there is provided an electronic device, including a readable storage medium and a processor;
where the readable storage medium is configured to store machine-executable instructions;
the processor is configured to read the machine-executable instructions from the readable storage medium and execute the machine-executable instructions to perform the above data integrity processing method.

According to a fourth aspect of embodiments of the present invention, there is provided a computer non-transitory readable storage medium, storing computer programs, where the computer programs are executed by a processor to perform the above data integrity processing method.

According to a fifth aspect of embodiments of the present invention, there is provided a computer program, stored in a computer readable storage medium, where the computer program is executed by a processor to perform the above data integrity processing method.

It can be known from the above descriptions that the management platform can automatically check the integrity of the data reported by the device, and actively obtain the data that has been reported by the device but not received by the management platform, such that the management platform can perform service processing based on the complete data, thus making the service processing effect more accurate.

### BRIEF DESCRIPTION OF DRAWINGS

FIG. 1 is a schematic diagram illustrating a management network according to an exemplary embodiment of the present invention.
FIG. 2 is a flowchart illustrating a data integrity processing method according to an exemplary embodiment of the present invention.
FIG. 3 is a hardware structure diagram illustrating an electronic device according to an exemplary embodiment of the present invention.
FIG. 4 is a block diagram illustrating a data integrity processing apparatus according to an exemplary embodiment of the present invention.

### DETAILED DESCRIPTION

Exemplary embodiments will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present invention. Rather, they are merely examples of apparatuses and methods consistent with some aspects of the present invention as detailed in the appended claims.

The terms used in the present invention are for the purpose of describing particular examples only, and are not intended to limit the present invention. Terms determined by "a", "the" and "said" in their singular forms in the present invention and the appended claims are also intended to include plurality, unless clearly indicated otherwise in the context. It should also be understood that the term "and/or" as used herein refers to and includes any and all possible combinations of one or more of the associated listed items.

It is to be understood that, although the terms "first," "second," "third," and the like may be used in the present invention to describe various information, such information should not be limited to these terms. These terms are only used to distinguish one category of information from another. For example, without departing from the scope of the present invention, first information may be referred as second information; and similarly, the second information may also be referred as the first information. Depending on the context, the term "if" as used herein may be interpreted as "when" or "upon" or "in response to determining".

A management network includes a management platform and at least one device. The device reports collected data to the management platform and the management platform performs service processing by using the data reported by the device.

In a related reporting mechanism, the device may re-report data after finding it fails to actively report the data. The management platform may perform service processing by directly using the data re-reported by the device. However, in practical applications, due to some reasons such as anomalies (e.g., link anomaly, or management platform anomaly or the like), the device may think it has actively and normally reported data but the management platform does not receive the data reported by the device. At this time, the data received by the management platform from the device is incomplete, and thus the service processing effect of the management platform is poor.

In view of the above, the present invention provides a data integrity processing method. The management platform receives data reported by at least one device managed by the management platform, and in response to determining to perform data integrity processing, determines data reported by a target device within a specified time period from the received data, and based on data identifiers of the data reported by the target device within the specified time period, determines target data that the management platform should have received but have not received from the target device, and then obtains the target data from the target device.

The management platform can automatically check the integrity of the data reported by the device, and actively obtain the data that has been reported by the device but not received by the management platform, such that the management platform can perform service processing based on the complete data, thus making the service processing effect more accurate.

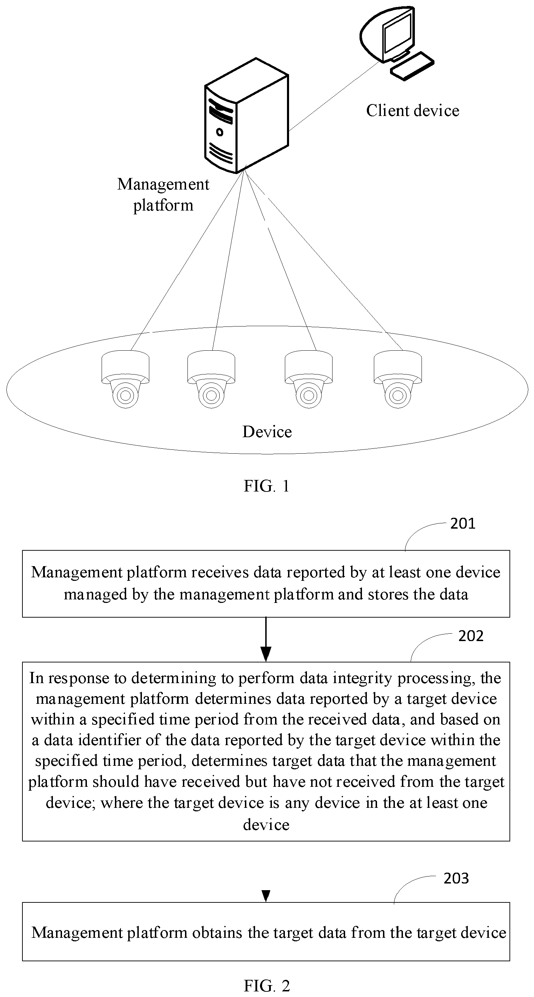

FIG. 1 is a schematic diagram illustrating a management network according to an exemplary embodiment of the present invention.

The management network includes a management platform, at least one to-be-managed device (for ease of descriptions, called a device herein) and a client coupled with the management platform.

The management platform is used to manage respective devices and process data reported by the one or more devices.

The management platform may be also coupled with the client of a manager to send relevant device information of each device to the client of the manager. The manager may view relevant information of each device on the client. The management platform may be set up by a server or a server cluster. The management platform herein is only illustrated and will not be specifically limited.

The device is configured to generate data and report the data to the management platform.

In a scenario, the management network can be an access control network, the device can be an access control device and the management platform can be a backstage device for managing the access control device.

In another scenario, the above management network can be a monitoring network, the device can be a monitoring device and the management platform can be a backstage device for managing the monitoring device.

The network used in the method of the present invention is only illustrated herein and is not limited specifically.

FIG. 2 is a flowchart illustrating a data integrity processing method according to an exemplary embodiment of the present invention. The method can be applied to a management platform and can include steps 201 to 203.

At step 201, the management platform receives data reported by at least one device managed by the management platform.

During implementation, the at least one device collects data, for example, the device is an access control device which may collect user information of a user passing through the access control device, for example, a face feature and a fingerprint of the user and the like.

In an optional implementation, after collecting the data, the device may report the data to the management platform. The management platform may receive and record the data reported by the device.

In another optional implementation, the management platform may periodically obtain and record the data newly collected within a period.

The step 201 is only illustrated herein and will not be specifically limited.

It should be noted that in addition to reporting the data to the management platform, the device may also report data information relating to the data, for example, a data generation time, and a device identifier of the device for data-reporting and the like. Herein, only illustrative descriptions are made and no specific limitation is made hereto.

In some embodiments, since the device has a mechanism of re-uploading after failure to send and the like, the device may send the same data repeatedly. In order to reduce the storage consumption of the management platform, the management platform may, after receiving the data reported by the device, perform de-duplication processing on the received data.

For example, the de-duplication processing may be that the management platform may detect whether the last-recorded data and the currently-received data are same in data identifier, and if same, discard the currently-received data; and if different, record the currently-received data. The de-duplication processing is only illustrated and will not be specifically limited herein.

Each of the data identifiers may include a data number. Further, each of the data identifiers may further include one or more of a device identifier or a timestamp for indicating a data generation time. The data identifier is only illustrated herein and will not be specifically limited.

For example, it is assumed that each of the data identifiers includes a data number, a timestamp for indicating a data generation time, and a device identifier. During de-duplication processing, the management device may detect whether the last-recorded data and the currently-received data are same in data number, timestamp for indicating data generation time and device identifier, and if same, discard the currently-received data, and if different, record the currently-received data.

At step 202, in response to determining to perform data integrity processing, the management platform determines data reported by a target device within a specified time period from the received data, and based on data identifiers of the data reported by the target device within the specified time period, determines target data that the management platform should have received but have not received from the target device; where the target device is a device in the at least one device.

The step 202 will be illustrated by steps 2021 to 2023 below.

At step 2021, the management platform determines to perform data integrity processing.

In an optional implementation, a data integrity check period is preset, and the management platform may determine to perform data integrity processing when the data integrity check period expires. In other words, the management platform may actively check the data integrity at a fixed frequency.

In another optional implementation, at least one data integrity processing moment is preset, and an interval between any two adjacent data integrity processing moments may be same or different. When the data integrity processing moment is reached, the management platform may determine to perform data integrity processing. In other words, the management platform may actively check the data integrity on a regular basis.

In another optional implementation, when receiving an integrity processing instruction from outside, the management platform may determine to perform data integrity processing. In other words, the management platform may perform data integrity processing in response to the external instruction.

At step 2022, the management platform determines the data reported by the target device within the specified time period from the received data.

The step 2022 will be detailed below by "the process of determining the target device by the management platform", "the process of determining the specified time period by the management platform" and "the process of determining, by the management platform, the data reported by the target device within the specified time period from the received data".
The process of determining the target device by the management platform is described below.

In an optional implementation, the above target device may be at least one preset device, and the management platform determines the target device from at least one device under its management based on preset configuration.

In another optional implementation, the management platform may determine a device indicated by the external integrity check instruction as the target device.

In another optional implementation, the management platform may determine each of the least one device under its management as the target device.

The manner of determining the target device is only illustrated herein and will not be specifically limited.

The process of determining the specified time period by the management platform is described below.

In an optional implementation, when the management platform performs data integrity processing at a fixed frequency, the management platform may determine one period as the specified time period. For example, the management platform may perform data integrity processing at the end of the first period. The management platform may determine the first period as the specified time period and determine the data reported by the target device within the first period.

In another optional implementation, when the management platform performs data integrity processing at a fixed time, the management platform may determine a time period between two adjacent data integrity processing moments as the specified time period. For example, it is assumed that the data integrity processing moments include a data integrity processing moment 1, and a data integrity processing moment 2 and the like. The management platform performs data integrity processing at the data integrity processing moment 1. When the management platform performs data integrity processing at the data integrity processing moment 2, the management platform may determine the data reported by the target device between the data integrity processing moment 1 and the data integrity processing moment 2.

In another optional implementation, when the management platform performs data integrity processing in response to an integrity check instruction, since the data integrity check instruction specifies a time period, the management platform may determine the time period specified by the data integrity check instruction as the specified time period. Alternatively, the data integrity check instruction does not specify a time period, and the management platform may determine a time period between the data integrity check instruction received last time and the data integrity check instruction received this time as the specified time period.

The manner of determining the specified time period is only illustrated and will not be specifically limited.
The process of determining, by the management platform, the data reported by the target device within the specified time period from the received data is described below.

During implementation, the management platform may determine the data received from the target device within the specified time period from the received data.

In an optional implementation, each of the data identifiers of the received data includes a data number. The data number may be a data flow number. For example, the data number of the first piece of collected data of the device 1 is 1, and the data number of the second piece of collected data is 2 and so on.

In some embodiments, the data number in the present invention is not limited to the flow number, a numeral and the like. The data number may also involve coding manner, for example, the data number of the first piece of collected data is AA, and the data number of the second piece of collected data is AB and the like. The data number is only illustrated herein and will not be specifically limited herein.

In an optional implementation, when the data numbers of the data reported by different devices are different in numbering manner, the management platform may select, from the received data, the data which is within the specified time period and corresponds in data numbering manner to the target device as the data reported by the target device within the specified time period.

For example, the data numbering manner of the device 1 is a binary numbering manner and the data numbering manner of the device 2 is a decimal numbering manner. If the device 2 is the target device, the management platform may select, from the received data, the data numbered decimally within the specified time period as the data reported by the device 2 within the specified time period.

For another example, the data numbering manner of the device 1 is continuous numbers between 1 and 5000, and the data numbering manner of the device 2 is continuous numbers between 5001 and 10000. If the device 2 is the target device, the management platform may select, from the received data, the data numbered between 5001 and 10000 within the specified time period as the data reported by the device 2 within the specified time period.

In another optional implementation, the data numbers of the data reported by different devices are same in data numbering manner. In this case, each of the data identifiers of the data reported by each device further includes a device number as well as the data number. At this time, the management platform may select, from the received data, the data which is within the specified time period and each has a data identifier containing the device identifier of the target device as the data reported by the target device within the specified time period.

For example, in practical applications, in order to facilitate configuration of the data numbering manner of each device, each device is usually configured to use a same data numbering manner. For example, each device uses a continuous decimal numbering manner between 1 and 10000.

At this time, the management platform may receive many different pieces of data with same number. In order to ensure the uniqueness of the data identifiers, each of the data identifiers of the data also includes a device identifier as well as the data number.

For example, the data identifier of the first piece of data reported by the device 1 is "data 1+device 1", and the data identifier of the first piece of data reported by the device 2 is "data 1+device 2". If the target device is the device 2, the management platform may determine, from the received data, the data which is within the specified time period and has a data identifier containing a device identifier being device 2 as the data reported by the device 2 within the specified time period.

The process of determining, by the management platform, the data reported by the target device within the specified time period from the received data is only illustrated herein and is not specifically limited.

At step 2023, based on the data identifiers of the data reported by the target device within the specified time period, the management platform determines the target data that the management platform should have received but have not received from the target device.

In an optional implementation, each of the data identifiers includes a data number. The descriptions about the data number can be referred to the above descriptions and will not be repeated herein.

During implementation, the management platform may, based on discontinuity of the data numbers of the data reported by the target device within the specified time period, determine the target data that the management platform should have received but have not received from the target device.

The implementation of the process that "the management platform may, based on the discontinuity of the data numbers of the data reported by the target device within the specified time period, determine the target data that the management platform should have received but have not received from the target device" will be described below.

In an optional implementation, different data have different data numbers. The data numbers of the data are arranged in a sequence of generating data by the device. For example, the data number of the first piece of data collected by the device is 1, the data number of the second piece of data collected by the device is 2, and the data number of the third piece of data collected by the device is 3, and so on.

For any two pieces of data with adjacent data numbers, if an absolute value of a difference of the data numbers of the two pieces of data is within a preset threshold range, the management platform determines the data with the data number between the data numbers of the two pieces of data as the target data.

In a situation that the data numbers of different data are different, the preset threshold range may be: greater than an absolute value of a difference of the data numbers of two pieces of data sequentially collected by the device. For example, the data number of the first piece of data collected by the device is 1, the data number of the second piece of data collected by the device is 2, and the data number of the third piece of data collected by the device is 3 and so on. In this case, the preset threshold range is greater than 1.

For example, the data numbers of the data which are recorded by the management platform and reported by the target device within the specified time period are 5, 6, 7, 10, 11, and 12, where the preset threshold range is greater than 1.

For any two pieces of data with adjacent data numbers, for example, two pieces of data with the data numbers being 5 and 6, since the absolute value of the difference between the data number 5 and data number 6 is 1, which is not within the preset threshold range, there is no target data between the two pieces of data, which should have been received but not actually been received by the management platform, in other words, there is no target data which has been reported by the device but has not been received by the management platform.

For example, for two adjacent pieces of data with the data numbers being 7 and 10, since the absolute value of the difference between the data number 7 and data number 10 is 3, which is within the preset threshold range, there is target data between the two pieces of data, which is reported by the device but not received by the management platform. The management platform may, based on the data number 7 and data number 10, determine the data with the data numbers 8 and 9 as the target data.

In another optional implementation, in order to save the data numbers, the data is numbered usually in a cyclic numbering manner, that is, when the data number reaches a preset value, the numbering will be started again from the start value. For example, the data numbering starts from 1 and restarted from 1 when reaching 1000.

Although the numbering manner can save numbers, partial data may have a same data number. Thus, in order to ensure the uniqueness of the data identifiers, each of the data identifiers further includes a timestamp for indicating a data generation time as well as the data number.

In this case, the management platform may, based on the timestamps of the received data, determine a data generation sequence of the received data, and then, based on the data generation sequence of the received data and the discontinuity of the data numbers of the data reported by the target device within the specified time period, determine the target data which should have been received but not received by the management platform from the target device (for example, the target data which is reported by the target device but not received by the management platform).

The implementation of the process that "the management platform may, based on the timestamps of the received data, determine the data generation sequence of the received data" will be described below.

In an optional implementation, the management platform may, based on the timestamps of the received data, sort the received data to obtain the data generation sequence of the received data.

For example, it is assumed that four pieces of data are received: the data number of the first piece of data is 2 with the timestamp being 12:00:01; the data number of the second piece of data is 3 with the timestamp being 12:00:02; the data number of the third piece of data is 4 with the timestamp being 12:00:03; the data number of the fourth piece of data is 998 with the timestamp being 12:00:00.

The electronic device may sort the four pieces of data based on the timestamps of the four pieces of data to form a data generation sequence. In this example, the data generation sequence from early to late is data 998, data 2, data 3, and data 4.

In another optional implementation, the management platform may determine the data generation sequence of the received data based only on the timestamps of multiple pieces of data of which the absolute value of the difference of the data numbers is greater than the preset threshold.

For example, it is assumed that four pieces of data are received: the data number of the first piece of data is 2 with the timestamp being 12:00:01; the data number of the second piece of data is 3 with the timestamp being 12:00:02; the data number of the third piece of data is 4 with the timestamp being 12:00:03; the data number of the fourth piece of data is 998 with the timestamp being 12:00:00.

Since the absolute value of the difference between the data number of the first piece of data and the data number of the fourth piece of data is greater than the preset threshold, the management platform may only compare the timestamps of the two pieces of data. Since the timestamp of the fourth piece of data is earlier than the timestamp of the first piece of data, the data generation sequence of the four pieces of data from early to late is data 998, data 2, data 3 and data 4.

The process of "the management platform may, based on the timestamps of the received data, determine the data generation sequence of the received data" is only illustrated herein and will not be specifically limited.

The implementation of the process that "based on the data generation sequence of the received data and the discontinuity of the data numbers of the data reported by the target device within the specified time period, the target data which should have been received but not received by the management platform from the target device is determined" will be described below.

During implementation, after determining the data generation sequence, the management platform may, for any two pieces of data with adjacent data numbers in this sequence, if the absolute value of the difference between the data numbers of the two pieces of data is within the preset threshold range, determine the data with the data number between the data numbers of the two pieces of data as the target data.

When the data numbers are numbered in a cyclic numbering manner, the preset threshold range is greater than an absolute value of a difference of the data numbers of two pieces of data sequentially collected by the device, and less than an absolute value of a difference of an end value and an initial value of the cyclic numbers. For example, if the data numbers are cyclic numbers of 1 to 1000, the preset threshold range is greater than 1 and less than 999.

For example, it is assumed that the data identifiers of the data which are recorded on the management platform and reported by the target device within the specified time period are: 2021123112:02:56+998, 2021123112:03:01+2, 2021123112:03:02+3.

In each of the data identifiers, the digits before "+" refer to the timestamp for generating data, and the digits after "+" refer to the data number. For example, 2021123112:02:56+998 refers to that the timestamp for generating the data is December 31, 2021, 12:02:56, and the data number of the data is 998.

The management platform may firstly determine the data generation sequence based on the timestamps. In this example, the determined time generation sequence is: 2021123112:02:56+998, 2021123112:03:01+2, 2021123112:03:02+3.

Then, for any two pieces of data with adjacent data numbers in the sorted data, if the absolute value of the difference between the data numbers of the two pieces of data is within the preset threshold range, the management platform determines the data with the data number between the data numbers of the two pieces of data as the target data.

For example, the preset threshold range is greater than 1 and less than 999. For the two pieces of data with the data numbers being 998 and 2, the management platform may calculate the absolute value of the difference between the data numbers of the two pieces of data as 996 which is within the preset threshold range, and thus the management platform may determine the data between 998 and 2, i.e., the data with the data numbers being 999, 1000 and 1 as the target data.

In practical applications, the management platform may also perform the step 2023 in another way, for example, determine the target data that has been reported by the device but not received by the management platform based on a packet sequence number of packets carrying the data from the device. The step 2023 is only illustrated herein and will not be specifically limited.

At step 203, the management platform obtains the target data from the target device.

After determining the target data, the management platform may obtain the target data from the target device.

During implementation, the management platform may send the data number of the target data to the target device, and receive the target data returned by the target device.

In some embodiments, when the data numbers of different data are different, the target device may query for the target data based on the data number and send the obtained target data to the management platform. The management platform may directly determine the received data reported by the target device as the target data.

In a case that the data numbers of partial data are same, the target device obtains the data indicated by the data number and including multiple pieces of data (e.g., target data and non-target data), and then reports the obtained data to the management platform. The management platform may, based on the timestamp corresponding to the target data, determine the target data from the data reported by the target device.

Of course, in practical applications, the management platform may also send the timestamp of the target data to the target device as well as the data number of the target data, such that the target device obtains the target data based on the data number and the timestamp and reports the target data to the management platform.

The process that the management platform obtains the target data from the target device is only illustrated herein and will not be specifically limited.

Furthermore, in order to ensure the management platform can successfully obtain the target data, the management platform may detect whether a connection between the management platform and the target device is normal when obtaining the target data.

If the connection between the management platform and the target device is normal, the management platform may receive the target data returned by the target device via the connection. For example, the management platform may send an obtaining request to the target device via the connection, where the obtaining request includes the data number of the target data. The management platform may receive the target data returned by the target device via the connection.

If the connection between the management platform and the target device is abnormal, the management platform may repair the abnormal connection, and after the repair is successful, receive the target data from the target device via the connection between the management platform and the target device. For example, the management platform may send an obtaining request including the data number of the target data to the target device via the repaired connection, and receive the target data from the target device.

When the abnormal connection is repaired, the management platform may automatically repair the connection based on a connection parameter of the connection. For example, the management platform may re-establish a connection with the target device and the like.

If the management platform detects that the connection is still abnormal after elapse of a preset time length starting from repairing the connection, the management platform gives alarm information; where the alarm information includes the connection parameter of the connection for triggering external to repair the connection. For example, the management platform may send the connection parameter to a network administrator for repairing the connection.

The external may refer to a manager or a server for connection repair outside the management platform, or the like. The connection repair is only illustrated herein and will not be limited specifically.

Furthermore, it is to be noted that since the device has a mechanism of re-uploading after failure to send and the like, the device may send the same data repeatedly. In order to reduce the storage consumption of the management platform, the management platform may, after receiving the target data reported by the target device, perform de-duplication processing on the received data.

For example, the de-duplication processing may be that the management platform may detect whether the last-recorded data and the target data are same in data identifier, and if same, discard the target data; and if different, record the target data. The de-duplication processing is only illustrated and will not be specifically limited herein.

Each of the data identifiers may include a data number. Further, each of the data identifiers may also include one or more of a device identifier or timestamps for indicating a data generation time. The data identifier is only illustrated herein and will not be specifically limited.

For example, if the data identifier includes a data number, a timestamp for indicating a data generation time, and a device identifier. During de-duplication processing, the management device may detect whether the last-recorded data and the target data are same in data identifier, timestamp for indicating data generation time and device identifier, and if same, discard the target data; and if different, record the target data.

It can be known from the above descriptions that since the management platform can automatically check the integrity of the data reported by the device and actively obtain from the device the data that should have been received but not received by the management platform (e.g., the data which has been reported by the device but not received by the management platform), such that the management platform can perform service processing using the complete data, making the service processing effect more accurate.

Furthermore, the present invention further provides an electronic device, which may be the above management platform. The electronic device may include a readable storage medium and a processor;
where the readable storage medium is configured to store machine-executable instructions;
the processor is configured to read the machine-executable instructions on the readable storage medium and execute the machine-executable instructions to perform the steps of the above data integrity processing method.

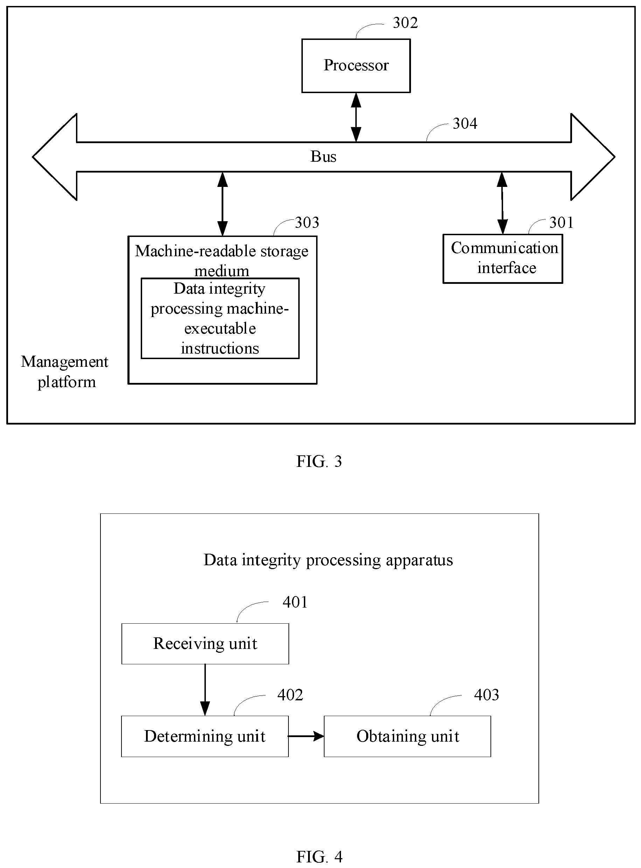

In some embodiments, as shown in FIG. 3, in addition to the processor 302 and the machine-readable storage medium 303, the electronic device may further include a communication interface 301, and a bus 304, where the communication interface 301 and the processor 302 and the machine-readable storage medium 303 communicate with each other via the bus 304. The processor 302 reads and executes the machine executable instructions corresponding to data processing control logic in the machine-readable storage medium 303 to perform the above data integrity processing method.

FIG. 4 is a block diagram illustrating a data integrity processing apparatus according to an exemplary embodiment of the present invention. The apparatus may be applied to a management platform, and include:
a receiving unit 401, configured to receive data reported by at least one device managed by the management platform;
a determining unit 402, configured to, in response to determining to perform data integrity processing, determine data reported by a target device within a specified time period from the received data, and based on data identifiers of the data reported by the target device within the specified time period, determine target data that the management platform should have received but have not received from the target device; where the target device is a device in the at least one device;
an obtaining unit 403, configured to obtain the target data from the target device.

In some embodiments, each of the data identifiers includes a data number;
when, based on the data identifiers of the data reported by the target device within the specified time period, determining the target data that the management platform should have received but have not received from the target device, the determining unit 402 is configured to: based on discontinuity of the data numbers of the data reported by the target device within the specified time period, determine the target data that the management platform should have received but have not received from the target device.

In some embodiments, data numbers of different data are different.

In some embodiments, in a case that the data numbers of partial data are same, each of the data identifiers further includes a timestamp indicating a data generation time; when, based on the discontinuity of the data numbers of the data reported by the target device within the specified time period, determining the target data that the management platform should have received but have not received from the target device, the determining unit 402 is configured to, based on the timestamps of the received data, determine a data generation sequence of the received data; based on the data generation sequence of the received data and the discontinuity of the data numbers of the data reported by the target device within the specified time period, determine the target data that the management platform should have received but have not received from the target device.

In some embodiments, when, based on the discontinuity of the data numbers of the data reported by the target device within the specified time period, determining the target data that the management platform should have received but have not received from the target device, the determining unit 402 is configured to, for any two pieces of data with adjacent data numbers, if an absolute value of a difference of the data numbers of the two pieces of data is within a preset threshold range, determine data with data number between the data numbers of the two pieces of data as the target data.

In some embodiments, when obtaining the target data from the target device, the obtaining unit 403 is configured to send the data number of the target data to the target device, and receive the target data indicated by the data number from the target device.

In some embodiments, when determining the data reported by the target device within the specified time period from the received data, the determining unit 402 is configured to, when different devices have different data numbering manners, select, from the received data, the data which is within the specified time period and corresponds in data numbering manner to the target device as the data reported by the target device within the specified time period; or, when different devices have a same data numbering manner and each of the data identifiers further includes a device identifier, select, from the received data, the data which is within the specified time period and each has a data identifier containing the device identifier of the target device as the data reported by the target device within the specified time period.

In some embodiments, when obtaining the target data from the target device, the obtaining unit 403 is configured to, if a connection between the management platform and the target device is normal, receive the target data from the target device via the connection; if the connection between the management platform and the target device is abnormal, repair the connection and after the repair is successful, receive the target data from the target device via the connection.

In some embodiments, if the connection between the management platform and the target device is abnormal, when the connection is repaired, the obtaining unit 403 is configured to, based on a connection parameter of the connection, repair the connection; if it is detected that the connection is still abnormal after elapse of a preset time length starting from repairing the connection, give alarm information; where the alarm information includes the connection parameter of the connection for triggering external to repair the connection.

In some embodiments, after obtaining the target data from the target device, the obtaining unit 403 is configured to, based on the received data, perform de-duplication processing on the target data obtained from the target device; after receiving the data reported by one or more of the at least one device managed by the management platform, the receiving unit 401 is configured to, based on the received data, perform de-duplication processing on the data obtained from the one or more of the at least one device.

In some embodiments, when determining to perform data integrity processing, the determining unit 402 is configured to, when an integrity check period expires, determine to perform data integrity processing; or, when an integrity check instruction is received, determine to perform data integrity processing; or, when a preset integrity check time point is reached, determine to perform data integrity processing.

Furthermore, the present invention further provides a computer readable storage medium, storing computer programs, where the computer programs are executed by a processor to perform the above data integrity processing method.

The machine-readable storage medium mentioned herein may be any of electronic, magnetic, optical or other physical storage devices and may contain or store information such as executable instructions, data and so on. For example, the machine-readable storage medium may be volatile or non-volatile memories or similar storage mediums. Specifically, the machine-readable storage medium may be a Radom Access Memory (RAM), a flash memory, a storage drive (e.g., hard disk drive), a solid-state hard disk, any type of storage disk (e.g., compact disk, Digital Video Disk (DVD)), or a similar storage medium, or a combination thereof.

Furthermore, the present invention further provides a computer program, stored in the computer readable storage medium, where the computer program is executed by a processor to perform the above data integrity processing method.

Since the embodiments of the apparatus, the computer readable storage medium, computer program and the electronic device substantially correspond to the method embodiments, a reference may be made to part of the descriptions of the method embodiments for the related part. The apparatus embodiments described above are merely illustrative, where the units described as separate members may be or not be physically separated, and the members displayed as units may be or not be physical units, i.e., may be located in one place, or may be distributed to a plurality of network units. Part or all of the modules may be selected according to actual requirements to implement the objectives of the solutions in the embodiments. Those of ordinary skill in the art may understand and carry out them without creative work.

The foregoing descriptions are embodiments of the present invention but not intended to limit the present invention.

## Claims

1. A data integrity processing method, applied to a management platform, and comprising:
receiving (201), by a server of the management platform, data reported by at least one device managed by the management platform;
in response to determining to perform data integrity (202) processing, determining, by the server, data reported by a target device within a specified time period from the received data, and based on data identifiers of the data reported by the target device within the specified time period, determining, by the server, target data that the management platform should have received but have not received from the target device; wherein the target device is a device in the at least one device; and
**characterized by**:
in response to determining that a connection between the management platform and the target device is normal, receiving (203), by the server, the target data from the target device via the connection; and
in response to determining that the connection between the management platform and the target device is abnormal, repairing, by the server, the connection based on a connection parameter of the connection;
in response to detecting that the connection is still abnormal after elapse of a preset time length starting from repairing the connection, giving, by the server, alarm information; wherein the alarm information comprises the connection parameter of the connection for triggering external to repair the connection; and
in response to detecting that the repair is successful, receiving, by the server, the target data from the target device via the connection.

2. The method of claim 1, wherein, each of the data identifiers comprises a data number; based on the data identifiers of the data reported by the target device within the specified time period, determining the target data that the management platform should have received but have not received from the target device comprises:
based on discontinuity of the data numbers of the data reported by the target device within the specified time period, determining the target data that the management platform should have received but have not received from the target device.

3. The method of claim 2, wherein in a case that the data numbers of partial data are same, each of the data identifiers further comprises a timestamp indicating a data generation time;
based on the discontinuity of the data numbers of the data reported by the target device within the specified time period, determining the target data that the management platform should have received but have not received from the target device comprises:
based on the timestamps of the received data, determining a data generation sequence of the received data; and
based on the data generation sequence of the received data and the discontinuity of the data numbers of the data reported by the target device within the specified time period, determining the target data that the management platform should have received but have not received from the target device.

4. The method of any one of claims 2 to 3, wherein based on the discontinuity of the data numbers of the data reported by the target device within the specified time period, determining the target data that the management platform should have received but have not received from the target device comprises:
for any two pieces of data with adjacent data numbers, if an absolute value of a difference of the data numbers of the two pieces of data is within a preset threshold range, determining data with data number between the data numbers of the two pieces of data as the target data; and
obtaining the target data from the target device comprises:
sending the data number of the target data to the target device; and
receiving the target data indicated by the data number from the target device.

5. The method of claim 4, wherein in a case that the data numbers are numbered in a cyclic numbering manner, the preset threshold range is greater than an absolute value of a difference of the data numbers of two pieces of data sequentially collected by the target device and less than an absolute value of a difference of an end value and an initial value of the cyclic numbers.

6. The method of claim 2, wherein determining the data reported by the target device within the specified time period from the received data comprises:
in a case that different devices have different data numbering manners, selecting, from the received data, the data that is within the specified time period and corresponds in data numbering manner to the target device as the data reported by the target device within the specified time period; or,
in a case that different devices have a same data numbering manner and each of the data identifiers further comprises a device identifier, selecting, from the received data, the data that is within the specified time period and each has a data identifier containing the device identifier of the target device as the data reported by the target device within the specified time period.

7. The method of claim 1, wherein after receiving, by the server, the target data from the target device via the connection, the method further comprises:
based on the received data, performing de-duplication processing on the target data obtained from the target device.

8. The method of claim 1, wherein after receiving the data reported by one or more of the at least one device managed by the management platform, the method further comprises:
based on the received data, performing de-duplication processing on the data obtained from the one or more of the at least one device.

9. The method of any one of claims 1 to 8, wherein determining to perform data integrity processing comprises:
in response to determining that an integrity check period expires, determining to perform data integrity processing; or,
in response to determining that an integrity check instruction is received, determining to perform data integrity processing; or,
in response to determining that a preset integrity check time point is reached, determining to perform data integrity processing.

10. A data integrity processing apparatus, applied to a management platform and comprising:
a receiving unit (401), configured to receive data reported by at least one device managed by the management platform;
a determining unit (402), configured to, in response to determining to perform data integrity processing, determine data reported by a target device within a specified time period from received data, and based on data identifiers of the data reported by the target device within the specified time period, determine target data that the management platform should have received but have not received from the target device; wherein the target device is a device in the at least one device; and
an obtaining unit (403), configured to obtain the target data from the target device;
**characterized in that** in response to determining that a connection between the management platform and the target device is normal, the obtaining unit (403) is configured to receive the target data from the target device via the connection; and in response to determining that the connection between the management platform and the target device is abnormal, the obtaining unit (403) is configured to repair the connection based on a connection parameter of the connection,
in response to detecting that the connection is still abnormal after elapse of a preset time length starting from repairing the connection, the obtaining unit (403) is configured to give alarm information; wherein the alarm information comprises the connection parameter of the connection for triggering external to repair the connection, and
in response to detecting that the repair is successful, the obtaining unit (403) is configured to receive the target data from the target device via the connection.

11. A computer non-transitory readable storage medium (303), storing computer programs, wherein the computer programs are executed by a processor to perform steps of the method of any one of claims 1 to 9.

12. A computer program product, including computer instructions, wherein the computer instructions are executed by a processor (302) to perform steps of the method of any one of claims 1 to 9.

## Patentansprüche

1. Datenintegritätsverarbeitungsverfahren, das auf eine Verwaltungsplattform angewendet wird und folgende Schritte umfasst:
Empfangen (201), durch einen Server der Verwaltungsplattform, von Daten, die durch mindestens eine Vorrichtung gemeldet werden, die durch die Verwaltungsplattform verwaltet wird;
als Reaktion auf ein Bestimmen, dass eine Datenintegritätsverarbeitung (202) durchgeführt werden soll, Bestimmen, durch den Server, von Daten, die durch eine Zielvorrichtung innerhalb eines spezifizierten Zeitraums aus den empfangenen Daten gemeldet werden, und basierend auf Datenkennungen der Daten, die durch die Zielvorrichtung innerhalb des spezifizierten Zeitraums gemeldet werden, Bestimmen, durch den Server, von Zieldaten, die die Verwaltungsplattform empfangen haben sollte, aber nicht von der Zielvorrichtung empfangen hat; wobei die Zielvorrichtung eine Vorrichtung in der mindestens einen Vorrichtung ist; und
**gekennzeichnet durch**:
als Reaktion auf ein Bestimmen, dass eine Verbindung zwischen der Verwaltungsplattform und der Zielvorrichtung normal ist, Empfangen (203), durch den Server, der Zieldaten von der Zielvorrichtung über die Verbindung; und
als Reaktion auf ein Bestimmen, dass die Verbindung zwischen der Verwaltungsplattform und der Zielvorrichtung anormal ist, Reparieren, durch den Server, der Verbindung basierend auf einem Verbindungsparameter der Verbindung; als Reaktion auf ein Bestimmen, dass die Verbindung nach dem Verstreichen einer voreingestellten Zeitdauer, die mit dem Reparieren der Verbindung beginnt, immer noch anormal ist, Ausgeben, durch den Server, von Alarminformationen; wobei die Alarminformationen den Verbindungsparameter der Verbindung umfassen, um eine Reparatur der Verbindung von extern auszulösen; und
als Reaktion auf ein Bestimmen, dass die Reparatur erfolgreich ist, Empfangen, durch den Server, der Zieldaten von der Zielvorrichtung über die Verbindung.

2. Verfahren nach Anspruch 1, wobei jede der Datenkennungen eine Datennummer umfasst;
basierend auf den Datenkennungen der Daten, die durch die Zielvorrichtung innerhalb des spezifizierten Zeitraums gemeldet werden, das Bestimmen der Zieldaten, die die Verwaltungsplattform empfangen haben sollte, aber nicht von der Zielvorrichtung empfangen hat, folgende Schritte umfasst:
basierend auf einer Diskontinuität der Datennummern der Daten, die durch die Zielvorrichtung innerhalb des spezifizierten Zeitraums gemeldet werden, Bestimmen der Zieldaten, die die Verwaltungsplattform empfangen haben sollte, aber nicht von der Zielvorrichtung empfangen hat.

3. Verfahren nach Anspruch 2, wobei in einem Fall, in dem die Datennummern von Teildaten gleich sind, jede der Datenkennungen ferner einen Zeitstempel umfasst, der eine Datenerzeugungszeit angibt;
basierend auf der Diskontinuität der Datennummern der Daten, die durch die Zielvorrichtung innerhalb des spezifizierten Zeitraums gemeldet werden, das Bestimmen der Zieldaten, die die Verwaltungsplattform empfangen haben sollte, aber nicht von der Zielvorrichtung empfangen hat, folgende Schritte umfasst:
basierend auf den Zeitstempeln der empfangenen Daten, Bestimmen einer Datenerzeugungssequenz der empfangenen Daten; und
basierend auf der Datenerzeugungssequenz der empfangenen Daten und der Diskontinuität der Datennummern der Daten, die durch die Zielvorrichtung innerhalb des spezifizierten Zeitraums gemeldet werden, Bestimmen der Zieldaten, die die Verwaltungsplattform empfangen haben sollte, aber nicht von der Zielvorrichtung empfangen hat.

4. Verfahren nach einem der Ansprüche 2 bis 3, wobei basierend auf der Diskontinuität der Datennummern der Daten, die durch die Zielvorrichtung innerhalb des spezifizierten Zeitraums gemeldet werden, das Bestimmen der Zieldaten, die die Verwaltungsplattform empfangen haben sollte, aber nicht von der Zielvorrichtung empfangen hat, folgende Schritte umfasst:
für beliebige zwei Datenelemente mit benachbarten Datennummern, wenn ein absoluter Wert einer Differenz der Datennummern der zwei Datenelemente innerhalb eines voreingestellten Schwellenbereichs liegt, Bestimmen von Daten mit einer Datennummer zwischen den Datennummern der zwei Datenelemente als die Zieldaten; und
das Erhalten der Zieldaten von der Zielvorrichtung folgende Schritte umfasst:
Senden der Datennummer der Zieldaten an die Zielvorrichtung; und
Empfangen der Zieldaten, die durch die Datennummer angegeben werden, von der Zielvorrichtung.

5. Verfahren nach Anspruch 4, wobei in einem Fall, in dem die Datennummern in einer zyklischen Nummerierungsweise nummeriert sind, der voreingestellte Schwellenbereich größer als ein absoluter Wert einer Differenz der Datennummern von zwei Datenelementen, die nacheinander durch die Zielvorrichtung gesammelt werden, und kleiner als ein absoluter Wert einer Differenz eines Endwerts und eines Anfangswerts der zyklischen Nummern ist.

6. Verfahren nach Anspruch 2, wobei das Bestimmen der Daten, die durch die Zielvorrichtung innerhalb des spezifizierten Zeitraums gemeldet werden, aus den empfangenen Daten folgende Schritte umfasst:
in einem Fall, in dem verschiedene Vorrichtungen verschiedene Datennummerierungsweisen aufweisen, Auswählen, aus den empfangenen Daten, der Daten, die innerhalb des spezifizierten Zeitraums sind und in der Datennummerierungsweise der Zielvorrichtung entsprechen, als die Daten, die durch die Zielvorrichtung innerhalb des spezifizierten Zeitraums gemeldet werden; oder
in einem Fall, in dem verschiedene Vorrichtungen eine gleiche Datennummerierungsweise aufweisen und jede der Datenkennungen ferner eine Vorrichtungskennung umfasst, Auswählen, aus den empfangenen Daten, der Daten, die innerhalb des spezifizierten Zeitraums sind und jeweils eine Datenkennung aufweisen, die die Vorrichtungskennung der Zielvorrichtung aufweist, als die Daten, die durch die Zielvorrichtung innerhalb des spezifizierten Zeitraums gemeldet werden.

7. Verfahren nach Anspruch 1, wobei nach dem Empfangen, durch den Server, der Zieldaten von der Zielvorrichtung über die Verbindung das Verfahren ferner folgende Schritte umfasst:
basierend auf den empfangenen Daten, Durchführen einer
Deduplizierungsverarbeitung an den Zieldaten, die von der Zielvorrichtung erhalten werden.

8. Verfahren nach Anspruch 1, wobei nach dem Empfangen der Daten, die durch eine oder mehrere der mindestens einen Vorrichtung gemeldet werden, die durch die Verwaltungsplattform verwaltet wird, das Verfahren ferner folgende Schritte umfasst:
basierend auf den empfangenen Daten, Durchführen einer Deduplizierungsverarbeitung an den Daten, die von der einen oder den mehreren der mindestens einen Vorrichtung erhalten werden.

9. Verfahren nach einem der Ansprüche 1 bis 8, wobei das Bestimmen, eine Datenintegritätsverarbeitung durchzuführen, folgende Schritte umfasst:
als Reaktion auf ein Bestimmen, dass eine Integritätsprüfperiode abläuft, Bestimmen, dass eine Datenintegritätsverarbeitung durchgeführt werden soll; oder
als Reaktion auf ein Bestimmen, dass eine Integritätsprüfanweisung empfangen wird, Bestimmen, dass eine Datenintegritätsverarbeitung durchgeführt werden soll; oder
als Reaktion auf ein Bestimmen, dass ein voreingestellter Integritätsprüfzeitpunkt erreicht ist, Bestimmen, dass eine Datenintegritätsverarbeitung durchgeführt werden soll.

10. Datenintegritätsverarbeitungsvorrichtung, die auf eine Verwaltungsplattform angewendet wird und Folgendes umfasst:
eine Empfangseinheit (401), die eingerichtet ist, Daten zu empfangen, die durch mindestens eine Vorrichtung gemeldet werden, die durch die Verwaltungsplattform verwaltet wird;
eine Bestimmungseinheit (402), die eingerichtet ist, um als Reaktion auf ein Bestimmen, dass eine Datenintegritätsverarbeitung durchgeführt werden soll, Daten zu bestimmen, die durch eine Zielvorrichtung innerhalb eines spezifizierten Zeitraums aus empfangenen Daten gemeldet werden, und basierend auf Datenkennungen der Daten, die durch die Zielvorrichtung innerhalb des spezifizierten Zeitraums gemeldet werden, Zieldaten zu bestimmen, die die Verwaltungsplattform empfangen haben sollte, aber nicht von der Zielvorrichtung empfangen hat; wobei die Zielvorrichtung eine Vorrichtung in der mindestens einen Vorrichtung ist; und
eine Erhalteeinheit (403), die eingerichtet ist, die Zieldaten von der Zielvorrichtung zu erhalten;
**dadurch gekennzeichnet, dass** als Reaktion auf ein Bestimmen, dass eine Verbindung zwischen der Verwaltungsplattform und der Zielvorrichtung normal ist, die Erhalteeinheit (403) eingerichtet ist, die Zieldaten von der Zielvorrichtung über die Verbindung zu empfangen; und
als Reaktion auf ein Bestimmen, dass die Verbindung zwischen der Verwaltungsplattform und der Zielvorrichtung anormal ist, die Erhalteeinheit (403) eingerichtet ist, die Verbindung basierend auf einem Verbindungsparameter der Verbindung zu reparieren,
als Reaktion auf ein Bestimmen, dass die Verbindung nach dem Verstreichen einer voreingestellten Zeitdauer, die mit dem Reparieren der Verbindung beginnt, immer noch anormal ist, die Erhalteeinheit (403) eingerichtet ist, Alarminformationen auszugeben; wobei die Alarminformationen den Verbindungsparameter der Verbindung umfassen, um eine Reparatur der Verbindung von extern auszulösen, und als Reaktion auf ein Bestimmen, dass die Reparatur erfolgreich ist, die Erhalteeinheit (403) eingerichtet ist, die Zieldaten von der Zielvorrichtung über die Verbindung zu empfangen.

11. Nichtflüchtiges computerlesbares Speichermedium (303), das Computerprogramme speichert, wobei die Computerprogramme von einem Prozessor ausgeführt werden, um Schritte des Verfahrens nach einem der Ansprüche 1 bis 9 durchzuführen.

12. Computerprogrammprodukt, das Computerbefehle aufweist, wobei die Computerbefehle von einem Prozessor (302) ausgeführt werden, um Schritte des Verfahrens nach einem der Ansprüche 1 bis 9 durchzuführen.

## Revendications

1. Procédé de traitement d'intégrité de données, appliqué à une plate-forme de gestion, et comprenant :
la réception (201), par un serveur de la plate-forme de gestion, de données rapportées par au moins un dispositif géré par la plate-forme de gestion ;
en réponse à la détermination d'effectuer un traitement d'intégrité de données (202), la détermination, par le serveur, de données rapportées par un dispositif cible dans une période de temps spécifiée à partir des données reçues, et sur la base d'identifiants de données des données rapportées par le dispositif cible dans la période de temps spécifiée, la détermination, par le serveur, de données cibles que la plate-forme de gestion aurait dû recevoir mais n'a pas reçues du dispositif cible ; dans lequel le dispositif cible est un dispositif dans l'au moins un dispositif ; et
**caractérisé par** :
en réponse à la détermination qu'une connexion entre la plate-forme de gestion et le dispositif cible est normale, la réception (203), par le serveur, des données cibles du dispositif cible via la connexion ; et
en réponse à la détermination que la connexion entre la plate-forme de gestion et le dispositif cible est anormale, la réparation, par le serveur, de la connexion sur la base d'un paramètre de connexion de la connexion ;
en réponse à la détection que la connexion est toujours anormale après l'écoulement d'une durée prédéfinie commençant à partir de la réparation de la connexion, la fourniture, par le serveur, d'informations d'alarme ; dans lequel les informations d'alarme comprennent le paramètre de connexion de la connexion pour déclencher le dispositif extérieur pour réparer la connexion ; et
en réponse à la détection que la réparation est réussie, la réception, par le serveur, des données cibles du dispositif cible via la connexion.

2. Procédé selon la revendication 1, dans lequel chacun des identifiants de données comprend un numéro de données ;
sur la base des identifiants de données des données rapportées par le dispositif cible dans la période de temps spécifiée, la détermination des données cibles que la plate-forme de gestion aurait dû recevoir mais n'a pas reçues du dispositif cible, comprenant :
sur la base d'une discontinuité des numéros de données des données rapportées par le dispositif cible dans la période de temps spécifiée, la détermination des données cibles que la plate-forme de gestion aurait dû recevoir mais n'a pas reçues du dispositif cible.

3. Procédé selon la revendication 2, dans lequel dans un cas où les numéros de données de données partielles sont identiques, chacun des identifiants de données comprend en outre une estampille temporelle indiquant un temps de génération de données ;
sur la base de la discontinuité des numéros de données des données rapportées par le dispositif cible dans la période de temps spécifiée, la détermination des données cibles que la plate-forme de gestion aurait dû recevoir mais n'a pas reçues du dispositif cible, comprenant :
sur la base des estampilles temporelles des données reçues, la détermination d'une séquence de génération de données des données reçues ; et
sur la base de la séquence de génération de données des données reçues et de la discontinuité des numéros de données des données rapportées par le dispositif cible dans la période de temps spécifiée, la détermination des données cibles que la plate-forme de gestion aurait dû recevoir mais n'a pas reçues du dispositif cible.

4. Procédé selon l'une quelconque des revendications 2 à 3, dans lequel sur la base de la discontinuité des numéros de données des données rapportées par le dispositif cible dans la période de temps spécifiée, la détermination des données cibles que la plate-forme de gestion aurait dû recevoir mais n'a pas reçues du dispositif cible, comprenant :
pour deux quelconques éléments de données avec des numéros de données adjacents, si une valeur absolue d'une différence des numéros de données des deux éléments de données est dans une plage de seuil prédéfinie, la détermination de données avec un numéro de données entre les numéros de données des deux éléments de données en tant que données cibles ; et
l'obtention des données cibles à partir du dispositif cible, comprenant :
l'envoi du numéro de données des données cibles au dispositif cible ; et
la réception des données cibles indiquées par le numéro de données à partir du dispositif cible.

5. Procédé selon la revendication 4, dans lequel dans un cas où les numéros de données sont numérotés selon une numérotation cyclique, la plage de seuil prédéfinie est supérieure à une valeur absolue d'une différence des numéros de données de deux éléments de données collectés séquentiellement par le dispositif cible et inférieure à une valeur absolue d'une différence d'une valeur de fin et d'une valeur initiale des numéros cycliques.

6. Procédé selon la revendication 2, dans lequel la détermination des données rapportées par le dispositif cible dans la période de temps spécifiée à partir des données reçues comprend :
dans un cas où différents dispositifs ont différentes méthodes de numérotation de données, la sélection, à partir des données reçues, des données qui sont dans la période de temps spécifiée et correspondent selon une méthode de numérotation de données au dispositif cible en tant que données rapportées par le dispositif cible dans la période de temps spécifiée ; ou,
dans un cas où différents dispositifs ont une même méthode de numérotation de données et chacun des identifiants de données comprend en outre un identifiant de dispositif, la sélection, à partir des données reçues, des données qui sont dans la période de temps spécifiée, chacune ayant un identifiant de données contenant l'identifiant de dispositif du dispositif cible en tant que données rapportées par le dispositif cible dans la période de temps spécifiée.

7. Procédé selon la revendication 1, dans lequel après la réception, par le serveur, des données cibles à partir du dispositif cible via la connexion, le procédé comprend en outre :
sur la base des données reçues, l'exécution d'un traitement de déduplication sur les données cibles obtenues à partir du dispositif cible.

8. Procédé selon la revendication 1, dans lequel après la réception des données rapportées par un ou plusieurs de l'au moins un dispositif géré par la plate-forme de gestion, le procédé comprend en outre :
sur la base des données reçues, l'exécution d'un traitement de déduplication sur les données obtenues à partir de l'un ou plusieurs de l'au moins un dispositif.

9. Procédé selon l'une quelconque des revendications 1 à 8, dans lequel la détermination d'effectuer un traitement d'intégrité de données comprend :
en réponse à la détermination qu'une période de contrôle d'intégrité expire, la détermination d'effectuer un traitement d'intégrité de données ; ou,
en réponse à la détermination qu'une instruction de contrôle d'intégrité est reçue, la détermination d'effectuer un traitement d'intégrité de données ; ou,
en réponse à la détermination qu'un point temporel de contrôle d'intégrité prédéfini est atteint, la détermination d'effectuer un traitement d'intégrité de données.

10. Appareil de traitement d'intégrité de données, appliqué à une plate-forme de gestion et comprenant :
une unité de réception (401), configurée pour recevoir des données rapportées par au moins un dispositif géré par la plate-forme de gestion ;
une unité de détermination (402), configurée pour, en réponse à la détermination d'effectuer un traitement d'intégrité de données, déterminer des données rapportées par un dispositif cible dans une période de temps spécifiée à partir de données reçues, et
sur la base d'identifiants de données des données rapportées par le dispositif cible dans la période de temps spécifiée, déterminer des données cibles que la plate-forme de gestion aurait dû recevoir mais n'a pas reçues du dispositif cible ; dans lequel le dispositif cible est un dispositif dans l'au moins un dispositif ; et
une unité d'obtention (403), configurée pour obtenir les données cibles à partir du dispositif cible ;
**caractérisé en ce que**, en réponse à la détermination qu'une connexion entre la plate-forme de gestion et le dispositif cible est normale, l'unité d'obtention (403) est configurée pour recevoir les données cibles du dispositif cible via la connexion ; et en réponse à la détermination que la connexion entre la plate-forme de gestion et le dispositif cible est anormale, l'unité d'obtention (403) est configurée pour réparer la connexion sur la base d'un paramètre de connexion de la connexion,
en réponse à la détection que la connexion est toujours anormale après l'écoulement d'une durée prédéfinie commençant à partir de la réparation de la connexion, l'unité d'obtention (403) est configurée pour fournir des informations d'alarme ; dans lequel les informations d'alarme comprennent le paramètre de connexion de la connexion pour déclencher le dispositif extérieur pour réparer la connexion, et
en réponse à la détection que la réparation est réussie, l'unité d'obtention (403) est configurée pour recevoir les données cibles du dispositif cible via la connexion.

11. Support de stockage lisible par ordinateur non transitoire (303), stockant des programmes informatiques, dans lequel les programmes informatiques sont exécutés par un processeur pour effectuer les étapes du procédé selon l'une quelconque des revendications 1 à 9.

12. Produit de programme informatique, comprenant des instructions informatiques, dans lequel les instructions informatiques sont exécutées par un processeur (302) pour effectuer les étapes du procédé selon l'une quelconque des revendications 1 à 9.
